(19) Europäisches Patentamt

European Patent Office

Office européen des brevets

(11) **EP 1 162 759 A2**

(12) **EUROPÄISCHE PATENTANMELDUNG**

(43) Veröffentlichungstag:
  **12.12.2001 Patentblatt 2001/50**

(51) Int Cl.⁷: **H04B 3/54**, H04L 25/02

(21) Anmeldenummer: **01113727.0**

(22) Anmeldetag: **05.06.2001**

(84) Benannte Vertragsstaaten:
  **AT BE CH CY DE DK ES FI FR GB GR IE IT LI LU
  MC NL PT SE TR**
  Benannte Erstreckungsstaaten:
  **AL LT LV MK RO SI**

(30) Priorität: **07.06.2000 DE 10027789**

(71) Anmelder: **IAD Gesellschaft für Informatik,
  Automatisierung und Datenverarbeitung mbH
  90613 Grosshabersdorf (DE)**

(72) Erfinder:
  • **Dostert, Klaus, Dr.-Ing.
    67706 Krickenbach (DE)**
  • **Zimmermann, Manfred, Dipl.-Ing.
    97953 Königheim (DE)**

(74) Vertreter: **Dreykorn-Lindner, Werner, Dipl.-Ing.
  Patentanwalt,
  Steinlachstrasse 2
  90571 Schwaig (DE)**

(54) **Bestimmung von Übertragungsfunktion in Niederspannungsnetzen**

(57)  2.1 Die aufwandsgünstige und genaue Bestimmung der komplexen Übertragungsfunktion und/oder der Impulsantwort sogenannter Powerline-Kanäle auf Energieverteilnetzen ist mit bekannten Geräten und Verfahren nur sehr eingeschränkt möglich. Da die Charakterisierung der Kanäle jedoch auf statistischer Basis erfolgen muss, ist eine umfangreiche Datenbasis für eine hinreichende statistische Sicherheit der Ergebnisse erforderlich.

2.2 Um eine genaue Vermessung gestörter Übertragungskanäle zu ermöglichen, welche auch bei starken Störungen (Schmalbandstörer, Impulsstörer) zuverlässige Ergebnisse liefert, ist erfindungsgemäß vorgesehen, dass sendeseitig (11) nach Maßgabe einer binären Pseudozufallsfolge ein breitbandiges periodisches Sendesignal (s(t)) mit annähernd weißem Spektrum im Messbereich, bestehend aus einer relativ langen Folge von Impulsen kleiner Amplitude mit bestimmten Mustern, sogenannten expandierten Impulsen, erzeugt und in das Energieverteilnetz eingespeist wird, dass empfangsseitig (13) das Empfangssignal (r(t)) nach Aufbereitung einem erwartungstreuen Schätzer (52) zur Schätzung der komplexen Übertragungsfunktion und der Impulsantwort des untersuchten Kanals (48) zugeführt wird, und dass das unter Ausnutzung des Wissens über die Periodenlänge des Sendesignals (s(t)) gewonnene Schätzergebnis, durch Wiederholung der Schätzung und Mittelwertbildung über die jeweiligen Ergebnisse, stetig verbessert wird.

2.3 Die Erfindung liegt auf dem Gebiet der Meßsysteme.

Fig. 1

EP 1 162 759 A2

**Beschreibung**

Die Erfindung betrifft in erster Linie ein Verfahren zur Bestimmung von komplexer Übertragungsfunktion und reeller Impulsantwort von Nachrichtenübertragungskanälen in elektrischen Energieverteilnetzen im Frequenzbereich mit einer unteren Grenzfrequenz von einem Mehrfachen der Netzfrequenz mittels breitbandiger Kanalschätzung. Weiterhin betrifft die Erfindung eine Einrichtung zur Durchführung des Verfahrens nach Anspruch 1.

Die Schaffung neuartiger schneller Fetznetzzugänge für die Telekommunikation im Ortsnetzbereich - auch Local Loop oder Last Mile genannt - ist derzeit Gegenstand intensiver Entwicklungsarbeiten. Nach der Aufhebung der Fernmeldemonopole hat auf breiter Front ein intensiver Wettbewerb eingesetzt, der jedoch im Ortsnetzbereich bislang kaum zur Wirkung kam. Der Hauptgrund hierfür ist, dass die ehemaligen Monopolisten hier nach wie vor die Eigentümer der Leitungsnetze sind. Alternativen in Form von Mikrowellen-Funknetzen oder Kabel-TV-Netzen sind zur Zeit in Entwicklung. Sie können jedoch aufgrund hoher Kosten in absehbarer Zeit keine flächendeckenden Alternativen zu bestehenden TK-Netzen bieten. Elektrische Energieverteilnetze hingegen haben - wie zahlreiche Studien und Feldversuche ergaben - durchaus dieses Potential. Sie sind flächendeckend und weitaus feiner verzweigt als jedes bestehende TK-Netz, denn sie erreichen nicht nur jedes Haus, sondern unmittelbar jeden Verbraucher elektrischer Energie und jede Steckdose. Aufgrund dieser hervorragenden Perspektiven hat sich unter dem Begriff "Powerline Communications (PLC)" ein neuer Industriezweig gebildet, der die technische Umsetzung der neuen Möglichkeiten und die Bereitstellung der damit verbundenen Dienstleistungen zum Ziel hat.

Zur Entwicklung von Kommunikationssystemen zur schnellen Datenübertragung über Energieverteilnetze und zur Fehlersuche beim Betrieb solcher Systeme ist es erforderlich, die nachrichtentechnischen Eigenschaften der Netze für einen Frequenzbereich von einigen kHz bis über 30 MHz zu bestimmen.

Die Dämpfung bei einzelnen, diskreten Frequenzen lässt sich relativ einfach mit einem Sinusgenerator und einem Meßempfänger, bei dem sehr kleine Bandbreiten einstellbar sind, oder einem Spektrumanalysator bestimmen. Wird das Signal über einen bestimmten Frequenzbereich gewobbelt (z.B. mit linear über der Zeit ansteigender Frequenz von der unteren zur oberen Frequenzgrenze), so kann die Dämpfung in einem beliebigen Frequenzband kontinuierlich bestimmt werden. Dieses Verfahren wurde z.B. zum Erzielen der Meßergebnisse für die Veröffentlichung " The Low Voltage Power Distribution Network as Last Mile Access Network - Signal Propagation and Noise Scenario in the HF-Range" in der Fachzeitschrift "AEÜ International Journal on Electronics and Communications", vol. 54, No. 1, Feb. 2000, pp. 13-22 von K. Dostert und M. Zimmermann eingesetzt.

Mit dem Verfahren kann nur der Betrag $|H(f)|$ der komplexen Übertragungsfunktion $\underline{H}(f) = |\underline{H}(f)| \exp (j(\varphi(f))$ bestimmt werden, jedoch nicht der Phasengang $\varphi(f)$. Der Kehrwert von $|H(f)|$ wird als Dämpfung $D(f)$ bezeichnet und meist im logarithmischen Maß $a(f) = 20 \lg D(f) = -20 \cdot \lg|H(f)|$ angegeben.

Mit den Ergebnissen von Dämpfungsmessungen können für einen Übertragungskanal die grundsätzlichen Möglichkeiten der Datenübertragung beurteilt werden. Man kann so z.B. grob bestimmen, welche Sendepegel zur Überbrückung bestimmter Entfernungen benötigt werden und welche Teile des Übertragungsbandes gut und welche aufgrund hoher Dämpfung schlecht für Kommunikationszwecke geeignet sind. Letzteres ist eine Besonderheit, die man bei gewöhnlichen Telekommunikationsmedien nicht oder nur schwach ausgeprägt vorfindet. Wenn man hingegen beabsichtigt, Niederspannungsnetze zur Telekommunikation mit Frequenzen bis etwa 30 MHz zu verwenden, ergibt sich in der Regel ein recht bizarrer Dämpfungsverlauf mit einem Anstieg der Dämpfung mit wachsender Frequenz. Es genügt keineswegs, nur wenige exemplarische Messungen durchzuführen, da Niederspannungsnetze sehr heterogen sind und viele Parameter der Netztopologie und der verwendeten Kabel den Frequenzgang der Dämpfung beeinflussen. Letztlich ist eine Beschreibung der Dämpfung von Niederspannungsnetzen im interessierenden Frequenzbereich nur auf statistischer Basis möglich. Hierfür ist eine umfangreiche Datenbasis, die Meßergebnisse aus vielen verschiedenen Netztopologien und über verschiedene Streckenlängen enthält.

Mit der Auswertung einer solchen Datenbasis lassen sich - wie schon erwähnt - grundlegende Aussagen über die Nutzbarkeit von Niederspannungsnetzen als Kommunikationsmedium gewinnen. Für den Entwurf von Übertragungssystemen und die Analyse ihrer Leistungsfähigkeit im Rahmen von Simulationen sind die Dämpfungsverläufe allein jedoch nicht ausreichend. Hierfür ist die vollständige komplexe Übertragungsfunktion $\underline{H}(f)$ mit Betrags- und Phasengang erforderlich. $\underline{H}(f)$ charakterisiert einen Kanal vollständig im Frequenzbereich; das Pendant zu $H(f)$ ist im Zeitbereich die Impulsantwort $h(t)$. Die Impulsantwort gibt unmittelbar Aufschluß über das Echoverhalten eines Kanals. Insbesondere die Länge der Impulsantwort ist maßgebend für die Festlegung wichtiger Übertragungssystemparameter, wie z.B. die Dauer des sogenannten Schutz- oder Guard-Intervalls bei OFDM (Orthogonal Frequency Division Multiplexing - das bevorzugte Modulationsverfahren für Powerline Telekommunikation). Hat man $\underline{H}(f)$ z.B. durch Messung bestimmt, dann kann man daraus mittels der inversen Fouriertransformation $h(t)$ berechnen, oder hat man umgekehrt $h(t)$ gemessen, kann $\underline{H}(f)$ durch Fouriertransformation berechnet werden.

Geräte, die zur Bestimmung von $\underline{H}(f)$ geeignet sind, sind z.B. vektorielle Netzwerkanalysatoren. Sie ermöglichen es, zur vollständigen Charakterisierung eines Zweitors den komplexen Reflexions- und Transmissionsfaktor als Funktion der Frequenz zu messen. Das Ergebnis kann in einer Streuparametermatrix $\underline{S}$, welche die Parameter $\underline{S}_{11}$,

$\underline{S}_{12}$, $\underline{S}_{21,}$ und $\underline{S}_{22}$ enthält, zusammengefaßt werden.

Der Streuparameter $\underline{S}_{21}$ beschreibt den komplexen Transmissionsfaktor von Tor 1 nach Tor 2, welcher der komplexen Übertragungsfunktion von Tor 1 nach Tor 2 entspricht. Die Tore müssen dabei jeweils mit einer Bezugsimpedanz $\underline{Z}_{ref}$ abgeschlossen sein. Ein vektorieller Netzwerkanalysator besteht aus zwei wesentlichen Komponenten, einem schmalbandigen Messempfänger und einem dazu synchronisierten Signalgenerator. Das Sendesignal von diesem Signalgenerator wird über den gewünschten Frequenzbereich durchgewobbelt. Da das Messverfahren schmalbandig arbeitet, bietet es einen sehr hohen Dynamikbereich von über 100 dB und eine Anzeigedynamik von mindestens 80 dB. Die Bezugsimpedanz beträgt in der Regel $Z_{ref}$ = 50Ω.

Eine PLC-Übertragungsstrecke stellt einen Zweitor dar, mit dem Eingang und Ausgang der Strecke als Tor 1 bzw. Tor 2. Die komplexe Übertragungsfunktion, d.h. der Streuparameter $\underline{S}_{21}$, kann somit prinzipiell mit einem Netzwerkanalysator bestimmt werden. Der entscheidende Nachteil ist jedoch, dass Signalgenerator und Messempfänger zur Gewährleistung des Synchronismus im gleichen Gerät eingebaut sind, während der Abstand der beiden Tore mehrere hundert Meter betragen kann. Somit ist ein zusätzliches koaxiales Messkabel zwischen Sende- und Empfangsort erforderlich. Während dies bei Messungen über kurze Distanzen (bis zu einigen 10 Metern, z.B. in Gebäuden) kein grundsätzliches Problem darstellt, bedeutet es bei Messungen zwischen Trafostation und Hausanschluß mit Strecken von einigen hundert Metern einen sehr hohen Aufwand und stößt sicher in etlichen Fällen auf unüberwindbare Hindernisse. Die Vermessung von Gebäudeinstallationsnetzen mittels Netzwerkanalysesystem ist z.B. in den Veröffentlichungen "Time Dependency of the Channel Characteristics of Low Voltage Power-Lines and its Effects on Hardware Implementation" in der Fachzeitschrift "AEÜ International Journal on Electronics and Communications", vol. 54, No. 1, Feb. 2000, pp. 2332 von C. Hensen und W. Schulz, sowie "Performance Measurements of Powerline Channels at High Frequencies" im Tagungsband "Proceedings of the Intern. Symp. on Powerline Communications and its Appl.", Tokyo, Japan 1998, pp. 229-237 von H. Philipps beschrieben.

Alternativ zu den Verfahren der "harmonischen Analyse" mit Netzwerkanalysatoren oder auch Spektrumanalysatoren kann der zu untersuchende Kanal mit breitbandigen Sendesignalen angeregt werden, die mindestens den interessierenden Frequenzbereich abdecken müssen. Eine Besonderheit bei Energieverteilnetzen ist, dass man es dort stets mit einem gewissen Störpegel zu tun hat, der nicht abgeschaltet werden kann. Der reale PLC-Betrieb muss ja am "lebenden" Netz, d.h. ohne Unterbrechung der Energieversorgung stattfinden. Für eine hinreichend genaue Vermessung derart gestörter Kanäle ist eine Anregung mit möglichst konstanter Leistungsdichte über alle Frequenzen wünschenswert.

Dies ist theoretisch mit einem idealen impulsförmigen Anregungssignal, einem Dirac-Impuls d(t) möglich. Ein Dirac-Impuls ist jedoch ein abstraktes theoretisches Signal, mit dem man mathematisch zwar sehr gut arbeiten kann, das aber physikalisch nicht erzeugbar ist, weil man eine unendlich hohe Amplitude bei verschwindender Breite realisieren müsste. Technisch ist ein Dirac-Impuls deswegen nur näherungsweise, z.B. durch rechteckförmige Impulse mit endlicher Dauer T und endlicher Amplitude generierbar, z.B. s(t) = A·rect (t/T). Die Fouriertransformierte, d.h. das Spektrum eines solchen Impulses ist gegeben durch AT si($\Pi$ fT)[1]. Somit hat das Spektrum den Wert AT bei f = 0 und die erste Nullstelle bei der Frequenz f = 1/T. Die 3dB-Grenzfrequenz, d.h. der Frequenzwert, an dem der Betrag des Spektrums auf AT/$\sqrt{2}$ fällt, liegt bei $f_{3dB}$ = 0,45/T.

Für die Schätzung der Impulsantwort eines Powerline-Kanals kann ein rechteckförmiges Sendesignal mit der Breite T und der Amplitude A verwendet werden, wenn sichergestellt ist, dass die 3dB-Grenzfrequenz des Sendespektrums mindestens den zu vermessenden Frequenzbereich abdeckt. Umfaßt dieser z.B. 20 MHz, bedeutet das, dass die Impulsdauer T < 2,25ns sein sollte. Im Empfänger muss zudem bekannt sein, wann der Sendeimpuls gesendet wird, es muss also zumindest eine Grobsynchronisation zwischen Sender und Empfänger gewährleistet sein. Die nötige Impulsamplitude A hängt davon ab, wie groß die zu erwartenden Dämpfungen und Störungen sind. Wird sie zu klein angesetzt, kann bei langen Strecken und/oder bei starker Störung keine Impulsantwort mehr detektiert werden, und das Verfahren versagt. Eine entscheidende Schwäche von Impulsmessverfahren ist, dass die gesamte Energie

$$E_S = \int_{-\infty}^{+\infty} s(t)^2 \, dt = A^2 \cdot T \qquad (1)$$

des Sendesignals s(t) in einem sehr kleinen Zeitintervall T konzentriert sein muss. Eine Erhöhung der Sendeenergie ist nur durch eine Erhöhung der Impulsamplitude möglich, da eine Verlängerung der Impulsdauer zu einer Verringerung der Bandbreite des Sendesignals führt. Eine Erhöhung der Sendeamplitude stellt zum einen hohe Anforderungen an die Linearität und Spitzenleistung der Endstufe des Meßsenders und ist zum anderen problematisch beim Einsatz an in Betrieb befindlichen Niederspannungsnetzen, da durch sehr hohe Impulsamplituden Störungen bei angeschlossenen Verbrauchern hervorgerufen werden können. Des weiteren können Nichtlinearitäten die Ergebnisse verfälschen, da bei der Messung Amplituden zum Einsatz kommen, die deutlich höher sind als die Amplituden typischer PLC-Sendesignale.

Weiterhin ist aus der DE 42 31 311 C2 ein Verfahren zum Bestimmen der Impulsantwort x(t) eines Übertragungskanals mit expandierten Impulsen aus einem Empfangssignal e(t) unter Nutzung der Kenntnis des in einem Sender erzeugten periodischen oder aperiodischen Testsignals a(t) auf der Basis der bekannten sogenannten erwartungstreuen Optimalschätzung und eine Einrichtung zur Durchführung dieses Verfahrens bekannt. Das Empfangssignal e(t), dem ein korreliertes oder unkorreliertes Störsignal n(t) überlagert sein kann, wird in einem Empfänger zunächst einem auf das Testsignal a(t) signalangepassten Filter und danach einem weiteren Filter zur Korrelationsnebenmaxima-Reduzierung zugeführt. Im einzelnen wird das Ausgangssignal des signalangepassten Filters durch einen schwellwertbildenden Entscheidungsalgorithmus in einen nachzufilternden Teil, in dem die störenden Schätzfehler hauptsächlich durch Korrelationsnebenmaxima bedingt sind, und einen nicht nachzufilternden Teil, in dem die störenden Schätzfehler von rein stochastischer Natur sind, separiert. Dabei wird nur der nachzufilternde Teil dem weiteren Filter zugeführt, dessen Übertragungsverhalten durch das Testsignal a(t) und die Länge des nachzufilternden Teils bestimmt ist und welches unabhängig vom Typ des Testsignals a(t) die störenden Korrelationsnebenmaxima dadurch eliminiert, dass es einen erwartungstreuen Schätzwert des Übertragungskanals innerhalb des dem nachzufilternden Teil zugeordneten Zeitbereichs ermittelt.

Für Radarsysteme ist aus der DE 196 15 353 C2 ein Verfahren zum Bestimmen der Impulsantwort $x'_{MOS}$ eines hochauflösenden bandbegrenzten Radarkanals in einer mit hinsichtlich der Bandbreite durch Einsatz eines binären Spreizcodes c der Länge N und der Chipdauer $T_c$ expandierten Sendeimpulses a(t) arbeitenden Radarstation bekannt. Dem Empfangssignal e kann dabei ein korreliertes oder unkorreliertes additives Störsignal n überlagert sein. Unter Nutzung der Kenntnis über den Spreizcode c und unter Verwendung eines Kanalschätzers, mit welchem in einem M interessierende Entfernungstorbereiche überdeckenden Zeitbereich wird eine sogenannte lineare erwartungstreue Optimalschätzung der Radarkanal-Impulsantwort $X'_{MOS}$ durchgeführt. Im einzelnen wird die im Kanalschätzer ausgeführte lineare erwartungstreue Optimalschätzung derart modifiziert, dass die Impulsantwort $X'_{MOS}$ des bandbegrenzten Radarkanals nach dem Grundprinzip einer Multiplikation des abgetasteten Empfangssignals e mit einer inversen Schätzmatrix $A_E^{-1}$ bestimmt wird. Dabei wird die Matrix $A_E$ durch Erweiterung der aus den Komponenten c; des Spreizcodes c dargestellten Rechteckmatrix zu einer rechtszirkulanten quadratischen Matrix gebildet, d.h. es gilt für einen Radarkanal die modifizierte erwartungstreue Optimalschätzung $X'_{MOS}$.

Schließlich ist aus der DE 42 33 222 A1 ein Meßsystem zur messtechnischen Bestimmung der zeitvarianten Impulsantwort eines Mobilfunkkanals bekannt, bei dem auf der Empfangsseite eine erwartungstreuen Optimalschätzung vorgenommen wird. Im allgemeinen wird ein Mobilfunkkanal durch Mehrwegeausbreitung, Abschattungen und Dopplerverschiebungen des Empfangssignals durch bewegte Sender, Empfänger bzw. Störer beeinflusst. Für die Charakterisierung des Funkkanals im Hinblick auf Mehrwegeausbreitung, Abschattungen und Dopplerverschiebungen muss die komplexe Impulsantwort mit Bezug auf die zu erwartende Datenrate bzw. Hochfrequenz-Bandbreite des Funksystems dynamisch und mit ausreichender Bandbreite gemessen werden. Ein hierfür geeignetes Meßsystem wird als Channel Sounder bezeichnet. Mit Spread-Spectrum-Signalen und Puls-Kompressions- bzw. Korrelationsverfahren können die Vorteile eines Prozessgewinns bezüglich des Signal/Rausch-Abstandes und damit einer größeren Empfindlichkeit sowie der Erfassung der Dopplereinflüsse aufgrund kurzer Messzeiten verknüpft werden. Sehr weite Verbreitung haben Systeme mit PN-BPSK-Signalen (PN-BPSK=Pseudonoise-Binary Phase Shift Keying)-speziell m-Sequenzen - gefunden. Sie unterscheiden sich im wesentlichen nur durch die Realisierung der eingesetzten zyklischen Korrelation. Aufgrund der Überlagerung der Korrelationsnebenzipfel, die den einzelnen Korrelationsspitzen zugeordnet sind, ist die innerhalb einer Impulsantwort erreichbare Dynamik abhängig von der Impulsantwort und im allgemeinen geringer als der Nebenzipfelabstand der Autokorrelationsfunktion des Sendesignals. Um die systembedingten Nachteile aufgrund der Korrelationsnebenzipfel zu vermeiden und im rauschfreien Fall eine möglichst exakte Vermessung der Übertragungsfunktion bzw. Impulsantwort des Mobilfunkkanals innerhalb der durch das Meßsystem vorgegebenen Messbandbreite zu gestatten, ist im einzelnen vorgesehen, dass ein speziell optimiertes komplexes Testsignal mit N Spektrallinien vorgesehen ist, dessen komplexe Einhüllende im Zeitbereich einen möglichst geringen Crest-Faktor aufweist (Crest-Faktor ist das Verhältnis von Scheitelwert zu Effektivwert des Testsignals). Zur Kanalvermessung im Empfänger ist eine Einrichtung zur sogenannten erwartungstreuen Optimalschätzung vorgesehen, bei der zum einen zur Ermittlung des Messfrequenzganges eine Kalibrierung durchgeführt wird, während welcher der Sender und der Empfänger unmittelbar miteinander verbunden sind. Schließlich ist zum anderen die Impulsantwort des bandbegrenzten Mobilfunkkanals nach dem Grundprinzip einer Division des Empfangsspektrums durch den Messfrequenzgang bestimmt. Für das Sendesignal wird also eine besondere Testsignalform benutzt, nämlich anstelle konventioneller, auf m-Sequenzen basierender Testsignale werden verschiedene, speziell optimierte Testsignale verwendet, deren komplexe Einhüllende einen minimalen Crest-Faktor aufweist. Nachteilig bei einem solchen Meßsystem ist einerseits die sehr spezielle Ausgestaltung des Sendesignals, welche u.a. zur Synchronisation aufwendige Frequenznormale erfordern, beispielsweise Rubidium-Frequenznormale zu einem Preis von etwa 10.000 DM. Andererseits werden mit dem „Channel- Sounder" Frequenzbereiche von 1 ..... 2 GHz untersucht, wobei Kanäle mit hoher Zeitvarianz (schnelles Fading, Dopplerverschiebung durch bewegte Objekte) hinsichtlich ihrer komplexen Impulsantwort zu vermessen sind, wobei jedoch keine aktiven Störer vorkommen. An Stromnetzen hingegen geht es um stationäre Kanäle im Frequenzbereich bis etwa 30MHz mit vielfältigen aktiven Störern, wobei es gilt, die reelle Impulsantwort so zu bestimmen, dass die Maxima und die Gesamtdauer klar erkennbar sind.

Wie die vorstehende Würdigung des Standes der Technik aufzeigt, ist die aufwandsgünstige und genaue Bestimmung der komplexen Übertragungsfunktion und/oder der Impulsantwort sogenannter Powerline-Kanäle auf Energieverteilnetzen mit bisherigen Geräten und Verfahren nur sehr eingeschränkt möglich. Da die Charakterisierung der Kanäle jedoch auf statistischer Basis erfolgen muss, ist eine umfangreiche Datenbasis für eine hinreichende statistische Sicherheit der Ergebnisse erforderlich. Bislang war es nicht möglich, diese Datenbasis zusammenzutragen.

Der Erfindung liegt gegenüber den bekannten Verfahren die Aufgabe zugrunde, dieses derart auszugestalten, dass eine genaue Vermessung gestörter Übertragungskanäle möglich ist, welche auch bei starken Störungen (Schmalbandstörer, Impulsstörer) zuverlässige Ergebnisse liefert.

Diese Aufgabe wird, ausgehend von einem Verfahren zur Bestimmung von komplexer Übertragungsfunktion und Impulsantwort von Nachrichtenübertragungskanälen mittels breitbandiger Kanalschätzung gemäß Patentanspruch 1 gelöst, indem

a) nach Maßgabe einer binären Pseudozufallsfolge ein breitbandiges periodisches Sendesignal mit annähernd weißem Spektrum im Messbereich, bestehend aus einer relativ langen Folge von Impulsen kleiner Amplitude mit bestimmten Mustern, sogenannten expandierten Impulsen, erzeugt und in das Energieverteilnetz eingespeist wird,
b) empfangsseitig das Empfangssignal nach Aufbereitung einem erwartungstreuen Schätzer zur Schätzung der komplexen Übertragungsfunktion und der Impulsantwort des untersuchten Kanals zugeführt wird,
c) das unter Ausnutzung des Wissens über die Periodenlänge des Sendesignals gewonnene Schätzergebnis, durch Wiederholung der Schätzung und Mittelwertbildung über die jeweiligen Ergebnisse, stetig verbessert wird,

wodurch auch unter extremen Störbedingungen eine genaue Schätzung ermöglicht wird und ohne dass eine zusätzliche Rückleitung zwischen Sender und Empfänger oder ein Zeit- und Frequenznormal zur Synchronisation erforderlich ist.

Das erfindungsgemäße Meßverfahren weist den Vorteil auf, dass auf überraschend einfache Art und Weise die Messungen grundsätzlich ohne zusätzliche Rückleitung und ohne Synchronisation durchführbar sind, so dass auch bei unzugänglichen Strecken das Meßverfahren angewandt werden kann.

Dazu werden erfindungsgemäß Signale großer Bandbreite benutzt, sogenannten Bandspreizsignale, die jedoch nicht nach dem Prinzip des Dirac-Impulses erzeugt werden, sondern durch eine relativ lange Folge von Impulsen kleiner Amplitude mit bestimmten Mustern, sogenannten expandierten Impulsen. Die Eigenschaften solcher Bandspreizsignale können an die Eigenschaften des Kanals angepaßt werden, so dass eine schnelle, hochauflösende Bestimmung der komplexen Übertragungsfunktion bzw. der Impulsantwort möglich ist. Die Erzeugung der Bandspreizsignale nach der beschriebenen Methode ist einfach, da periodische, sogenannte Pseudozufallsfolgen verwendet werden können, die auf digitalem Wege generiert werden können.

Empfangsseitig kommt ein Schätzalgorithmus zur Anwendung, der die Eigenschaft der Erwartungstreue hat. Das bedeutet, dass die das Schätzergebnis mit jeder Wiederholung besser wird. Dadurch ergibt sich eine besondere Robustheit gegenüber Störungen, wie Impulsstörern und Schmalbandstörern, wie sie z.B. auf Energieverteilnetzen die Regel sind. Der Empfänger kann das Wissen über die Periodenlänge des Sendesignals vorteilhaft nutzen und benötigt so keine zusätzliche Synchronisation. Insbesondere ist weder eine Rückleitung noch eine untragbar teure Referenz in Form eines Frequenznormal, wie beim Gegenstand der DE 42 33 222 A1, nötig.

Weiterhin wird diese Aufgabe von einer Einrichtung zur Durchführung des Verfahrens nach Anspruch 1 gemäß Patentanspruch 7, dadurch gelöst, dass

a) sendeseitig eine binäre Pseudozufallsfolge in Form einer m-Sequenz derart erzeugt (in 21) wird, dass Folgenlänge und Taktfrequenz an den zu untersuchenden Kanal anpassbar sind, dass durch Vervielfachen der Abtastrate (in 22) die m-Sequenz so breitbandig wird, dass im interessierenden Frequenzbereich ein annähernd weißes Spektrum vorliegt, und dass dieser Bereich durch ein digitales Tiefpassfilter (23) herausselektiert und einem Digital/Analogwandler (24) mit nachfolgendem Rekonstruktionstiefpass periodisch zugeführt wird und das nunmehr in analoger Form vorliegende breitbandige Sendesignal nach Verstärkung (in 43) in das Energieverteilnetz gekoppelt wird,
b) empfangsseitig zur Aufbereitung von Pegel und Spektrum des Empfangssignals (r(t)) für die anschließende Analog/Digitalwandlung in einem Analog-Digital-Wandler (51) ein Empfangskoppler (49), ein Verstärker (50) und ein Antialiasing-Filter angeordnet sind und
c) das aufbereitete digitalisierte Empfangssignal (e(k)) am Ausgang des Analog-Digital-Wandlers (51) einer digitalen Rechenschaltung (52) zugeführt wird, welche die erwartungstreue Schätzung der Impulsantwort h(k) des Übertragungskanals vornimmt, wobei eine mehrfache Wiederholung der Schätzung und Mitteln der jeweiligen Resultate das Schätzergebnis stetig verbessert, so dass selbst unter hohen Störbedingungen die zuverlässige und genaue Bestimmung von Impulsantwort und komplexer Übertragungsfunktion möglich sind.

Insgesamt haben erfindungsgemäßes Verfahren und Vorrichtung zur Durchführung des Verfahrens folgende wesentliche Vorteile:

- Es ist keine Synchronisation zwischen Sender und Empfänger nötig (keine zusätzliche Leitung).
- Die Qualität der Meßergebnisse kann bei starken Störungen durch Verlängerung der Meßzeit soweit wie nötig verbessert werden.
- Eine Messung kann sehr schnell erfolgen, d.h. mit einem Signalabschnitt, der nur wenige Millisekunden lang ist.
- Ein Meßsystem kann vollständig in digitaler Technik aufgebaut werden.

Bei einer bevorzugten Ausgestaltung der Erfindung wird, gemäß Patentanspruch 2, die binäre Pseudozufallsfolge in Form einer m-Sequenz erzeugt, wobei Folgenlänge und die Taktfrequenz an den zu untersuchenden Kanal anpassbar sind, und durch Vervielfachen der Abtastrate wird die m-Sequenz so breitbandig, dass im interessierenden Frequenzbereich ein annähernd weißes Spektrum vorliegt.

Für eine möglichst gute, kanalangepasste Schätzung der Impulsantwort mit einem linearen erwartungstreuen Schätzer sind folgende Forderungen an die Gestaltung des Sendesignals zu stellen:

1. Eine Schätzung der Übertragungsfunktion ist nur bei Frequenzen möglich, wo der Kanal mit einer gewissen Sendeenergie erregt wird. Für eine hohe Genauigkeit der Schätzung muss deshalb die spektrale Leistungsdichte $S_{qq}(f)$ des Sendesignals in den Frequenzbereichen möglichst hoch sein, in denen die Störleistungsdichte $S_{nn}(f)$ auch hoch ist. Ist die Störleistung im zu untersuchenden Frequenzbereich weiß (das bedeutet sie ist für alle Frequenzen gleich), dann muss ein optimales Sendesignal ebenfalls ein weißes Spektrum haben. Liegen keine Vorabinformationen über die spektrale Verteilung der Störungen vor, dann ist auch ein Sendesignal mit weißem Spektrum die bestmögliche Wahl.

2. Für die Bestimmung der Impulsantwort mit periodischen Sendesignalen muss deren Periodendauer $T_q = N\,TA$ länger sein, als die maximale Länge einer zu messenden Impulsantwort $T_{Kmax}$.

Diese Ausgestaltung der Erfindung gemäß Patentanspruch 2 weist den Vorteil auf, dass durch an sich bekannte binäre Pseudozufallsfolgen maximaler Länge, sogenannte m-Sequenzen (eine umfassende Behandlung findet sich z B. im Fachbuch Lüke, H.D.: Korrelationssignale Springer Verlag, 1992) die oben genannten Anforderungen sich erfüllen lassen.

In Weiterbildung der Erfindung werden, gemäß Patentanspruch 3, die Übertragungsfunktionen bzw. Impulsantworten von sende- und empfangsseitigen Komponenten zur Filterung, Verstärkung und Kopplung von Sendesignal und Empfangssignal in einem Kalibriermodus bestimmt und als "Kalibrierspektrum" gespeichert, so dass bei nachfolgenden Messungen ausschließlich die komplexe Übertragungsfunktion bzw. die reelle Impulsantwort des zu vermessenden Kanals erfaßt wird.

Diese Weiterbildung der Erfindung weist den Vorteil auf, dass zur Eliminierung linearer Verzerrungen, die insbesondere von den analogen Meßsystemkomponenten verursacht werden, das Meßsystem einen Kalibriermodus beinhaltet, der eine Bestimmung dieser Verzerrungen erlaubt.

Vorzugsweise erfolgt, gemäß Patentanspruch 4, das Schätzverfahren nach Maßgabe folgender Schätzgleichung

$$\hat{h} = Q^{-1} \cdot e = T^{-1}_{DFT}\, \Lambda^{-1} T_{DFT} \cdot e$$

wodurch eine Schätzung im Zeitbereich vorgenommen wird, welche auf der Inversion der Matrix $Q_{eff}$ des effektiven Sendesignals basiert.

Durch die Verwendung einer Schätzmatrix W in Form der Inversion der Sendesignalmatrix Q und Mittelwertbildung kann auf einfache Art und Weise eine erhebliche Verbesserung der Schätzergebnisse für PLC-Kanäle aller Art erreicht werden.

In Weiterbildung der Erfindung wird, gemäß Patentanspruch 5, das zeitdiskrete Empfangssignal einer diskreten Fouriertransformation unterworfen, das Ergebnis mit einer gespeicherten inversen Diagonalmatrix multipliziert und der so erhaltene Schätzwert der Übertragungsfunktion $\underline{H}(\eta)$ wird einer inversen diskreten Fouriertransformation unterworfen und in den Zeitbereich zurücktransformiert wird, wodurch die Schätzung der diskreten Impulsantwort $\mathbf{h}(k)$

erhalten.

Diese Weiterbildung der Erfindung weist den Vorteil auf, dass durch die Transformation der Schätzmatrix W in Diagonalform mit Hilfe der diskreten Fouriertransformationsmatrix eine Implementierung dieses Verfahren auf handelsüblichen digitalen Rechenmaschinen möglich ist. Durch die Anwendung der schnellen Fouriertransformation und der inversen schnellen Fouriertransformation ist eine sehr effiziente Realisierung des Schätzsystems erreichbar.

Bei einer bevorzugten Ausgestaltung der Erfindung werden, gemäß Patentanspruch 6, zur Bestimmung der gesuchten Impulsantwort h (k) eines Übertragungskanals zuerst im Kalibriermodus Sende- und Empfangskoppler miteinander verbunden und danach wird die Matrix $\Lambda_K$ = diag ($\lambda_K$), mit $\lambda_K$ = $T_{DFT} \cdot q_{eff}$ ermittelt und abgespeichert.

Diese Ausgestaltung der Erfindung weist den Vorteil auf, dass die Modifikation des ursprünglichen Sendesignals q(k) durch die Sender- und Empfängerkomponenten, welche das effektive Sendesignal $q_{eff}$(k) beinhaltet, durch direkte Verbindung von Sende- und Empfangskoppler und Abspeicherung der Werte auf einfache Art und Weise eliminiert werden kann.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:

Fig. 1    einen Aufbau des Gesamtsystems zur Kanalvermessung mit Bandspreizsignalen gemäß der Erfindung,
Fig. 2    ein abstraktes zeitdiskretes Modell, bestehend aus Sender, Kanal, und Empfänger,
Fig. 3    die Implementierung des Schätzverfahrens mittels DFT und IDFT,
Fig. 4    ein bevorzugte Ausführungsform zur Erzeugung des Sendesignals.

Der Erfindung liegt ein Verfahren zugrunde, mit dem aus einem mit Störungen überlagerten Empfangssignal unter Kenntnis des gesendeten Signals die komplexe Übertragungsfunktion bzw. die Impulsantwort von PLC-Kanälen auf Energieverteilnetzen bestimmt werden kann. Für die digitale Implementierung des Verfahrens ist die zeitdiskrete Darstellung der kontinuierlichen Signale durch ihre Abtastwerte erforderlich, d.h. an die Stelle der kontinuierlichen Zeit t treten diskrete Zeitpunkte k TA, wobei TA das Abtastraster ist. Alle Signale und auch die Impulsantwort des Übertragungskanals lassen sich dann vorteilhaft als Vektoren darstellen. Prinzipiell ist das erfindungsgemäße Meßverfahren in allen digitalen Übertragungssystemen, bei denen die grundsätzlichen Möglichkeiten der Datenübertragung beurteilt werden sollen, einsetzbar.

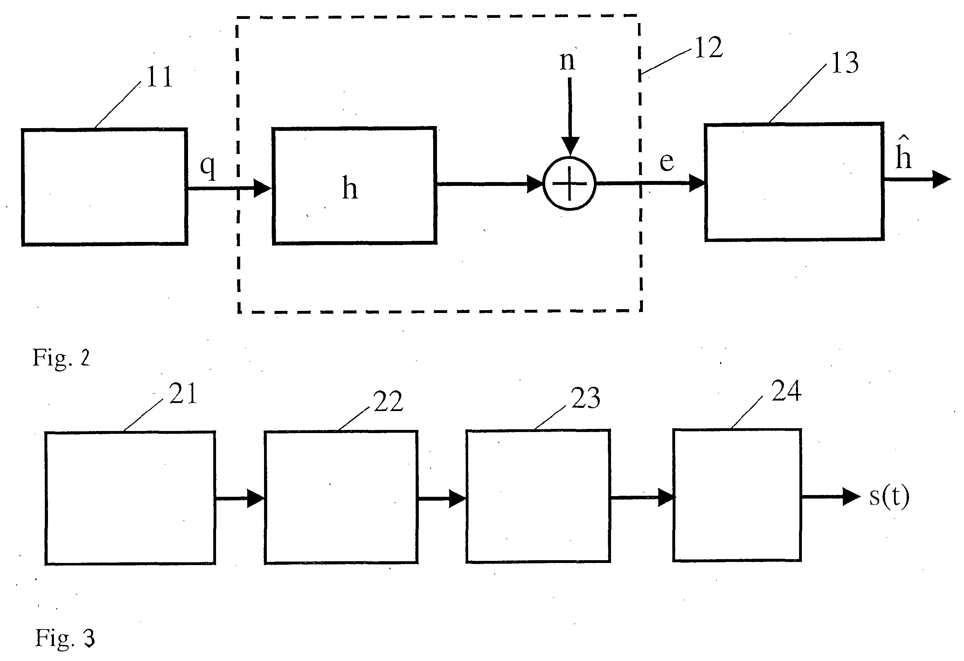

Fig. 2 zeigt das abstrakte zeitdiskrete Modell mit einem Sender 11, der den Sendevektor **q** liefert, einem Übertragungskanal 12 mit der Impulsantwort **h** und dem Vektor des Störsignals **n** und schließlich einem Empfänger 13, der das Empfangssignal **e** aus dem Kanal erhält. Aus der empfängerseitigen Verarbeitung des Empfangssignals **e** erhält man schließlich den gesuchten Schätzwert **h** der Impulsantwort. Nach Fig. 2 ergibt sich das zeitdiskrete Empfangssignal

$$e(k) = q(k) * h(k) + n(k) = \sum_{n=-\infty}^{\infty} q(k-n) \cdot h(n) + n(k) \quad (2)$$

Bei Verwendung periodischer Pseudozufallsfolgen mit der Periodenlänge N zur Erzeugung der senderseitigen Bandspreizsignale hat man den Sendevektor

$$q^T = [q_1 \; q_2 \; .... \; q_N] \quad (3)$$

und mit der rechtszirkulanten Sendesignalmatrix

$$Q = \begin{bmatrix} q_1 & q_N & q_{N-1} & q_2 \\ q_2 & q_1 & q_N & q_3 \\ q_3 & q_2 & q_1 & q_4 \\ q_N & q_{N-1} & q_{N-2} & q_1 \end{bmatrix} \quad (4)$$

kann entsprechend Gleichung (2) der Empfangssignalvektor

$$e = Q \cdot h + n \tag{5}$$

berechnet werden.

Eine Schätzung der Impulsantwort

$$\hat{h} = W \cdot e \tag{6}$$

läßt sich mit der Schätzmatrix

$$W = Q^{-1} \tag{7}$$

über die lineare erwartungstreue Schätzgleichung (6) bestimmen; siehe z.B. die Veröffentlichung: "Optimale erwartungstreue Algorithmen zur hochauflösenden Kanalschätzung mit Bandspreizsignalformen" in Fortschrittsberichte VDI, Reihe 10, Nr. 278, VDI-Verlag, Düsseldorf 1994 von T. Felhauer.

Durch die Eigenschaft der Erwartungstreue des Schätzers ist gewährleistet, dass bei wiederholter Schätzung und Mittelung sich das Ergebnis verbessert. Das bedeutet, dass bei einer Schätzung über M Perioden der Länge N des Sendesignals, beschrieben durch

$$\overline{\hat{h}} = \frac{1}{M} \sum_{i=1}^{M} \hat{h}_i \, , \tag{8}$$

das Ergebnis unempfindlicher gegen solche Störungen wird, die nicht die gleiche Periodizität wie das Sendesignal haben. Die Erweiterung um diese Mittelwertbildung nach Gleichung (8) führt zu einer erheblichen Verbesserung der Schätzergebnisse für PLC-Kanäle aller Art.

Nach Gleichung (7) ergibt sich die Schätzmatrix **W** durch Inversion der Sendesignalmatrix **Q,** so dass für eine möglichst gute, kanalangepasste Schätzung der Impulsantwort mit einem linearen erwartungstreuen Schätzer bereits vorstehend beschriebene zwei Forderungen an die Gestaltung des Sendesignals zu stellen sind. Erfüllt ein Sendesignal die beiden Anforderungen, dann kann mit Gleichung (8) selbst bei einem stark gestörten Kanal die komplexe Übertragungsfunktion mit hoher Genauigkeit bestimmt werden.

Die Anforderungen lassen sich vorteilhaft mit binären Pseudozufallsfolgen maximaler Länge, sogenannten m-Sequenzen (eine umfassende Behandlung findet sich z B. im Fachbuch Lüke, H.D.: Korrelationssignale Springer Verlag, 1992) erfüllen. M-Sequenzen können sehr einfach z.B. mit Hilfe rückgekoppelter Schieberegister mit hoher Taktfrequenz erzeugt werden. Die Rückkopplungen werden in der Regel mit Exklusiv-Oder-Gattern gebildet und bei n Schieberegisterstufen hat eine m-Sequenz stets die Länge N = 2n-1 Chips (das bedeutet sie ist für alle Frequenzen gleich). Das Leistungsdichtespektrum einer m-Sequenz ist nicht weiß, sondern hat eine $[si(f)]^2$-förmige Einhüllende, d.h. es hat einen glockenförmigen Verlauf mit dem Maximum bei tiefen Frequenzen und einer Abnahme zu höheren Frequenzen, wobei die ersten Nullstellen bei der Taktfrequenz des Schieberegisters liegen.

Um die Forderung nach einem weißen Sendespektrum für den zu vermessenden Frequenzbereich zu erfüllen, könnte man die Taktfrequenz des Schieberegisters genügend hoch wählen. Erfindungsgemäß wird jedoch zunächst die m-Sequenz mit moderater Abtastrate im Funktionsblock 21 erzeugt, und dann die Abtastrate in Block 22 vervielfacht (siehe Fig. 3). Dadurch werden die Nullstellen zu sehr hohen Frequenzen, d.h. weit über die Grenze des zu untersuchenden Frequenzbereichs hinaus, verschoben. Anschließend folgt ein Tiefpaß 23, der vorzugsweise digital aufgebaut ist und den Nutzfrequenzbereich selektiert, in dem nunmehr ein praktisch weißes Spektrum vorliegt. Nach einer D/A-Wandlung 24 steht das analoge Sendesignal s(t) zur Verfügung.

Eine vorteilhafte Implementierung des Schätzgleichung (6) ist durch die Transformation der Schätzmatrix W in Diagonalform mit Hilfe einer diskreten Fouriertransformationsmatrix möglich. Eine solche Matrix ist die

$$T_{DFT} = [e^{-j2\Pi(l-1)(m-1)/N}]\ l,\ m = 1 \ldots N$$

$$T_{DFT} = \begin{bmatrix} 1 & 1 & 1 & 1 & \ldots & 1 \\ 1 & e^{-j2\Pi\frac{1}{N}} & e^{-j2\Pi\frac{2}{N}} & e^{-j2\Pi\frac{3}{N}} & \ldots & e^{-j2\Pi\frac{(N-1)}{N}} \\ 1 & e^{-j2\Pi\frac{2}{N}} & e^{-j2\Pi\frac{4}{N}} & e^{-j2\Pi\frac{6}{N}} & \ldots & e^{-j2\Pi\frac{2\cdot(N-1)}{N}} \\ 1 & e^{-j2\Pi\frac{3}{N}} & e^{-j2\Pi\frac{6}{N}} & e^{-j2\Pi\frac{9}{N}} & \ldots & e^{-j2\Pi\frac{3\cdot(N-1)}{N}} \\ & & & & \ldots & \\ 1 & e^{-j2\Pi\frac{(N-1)}{N}} & e^{-j2\Pi\frac{(N-1)\cdot2}{N}} & e^{-j2\Pi\frac{(N-1)\cdot3}{N}} & \ldots & e^{-j2\Pi\frac{(N-1)\cdot(N-1)}{N}} \end{bmatrix} \quad (9)$$

Mit Hilfe von $T_{DFT}$ wird nun aus dem Sendevektor q

$$\lambda = T_{DFT} \cdot q \qquad (10)$$

bestimmt und damit die Diagonalmatrix

$$\Lambda = \mathrm{diag}(\lambda) = \begin{bmatrix} \lambda_1 & 0 & \ldots & 0 \\ 0 & \lambda_2 & \ldots & . \\ . & & \ldots & 0 \\ 0 & \ldots & 0 & \lambda_N \end{bmatrix} \qquad (11)$$

gebildet. Jetzt kann entsprechend den Ausführungen "A note on the Application of the FFT to the solution of a System of Toeplitz Normal Equations" in Fachzeitschrift IEEE Transactions on Circuits and Systems, vol. 27 (1980), No.2 (February), pp. 151-154 von R. Yarlagadda und B.N. Suresh Babu die Sendesignalmatrix

$$Q = \frac{1}{N} T^*_{DFT}\ \Lambda\ T_{DFT} = T^{-1}_{DFT}\ \Lambda\ T_{DFT} \qquad (12)$$

bestimmt werden, und daraus folgt die endgültige Schätzgleichung:

$$\hat{h} = Q^{-1} \cdot e = T^{-1}_{DFT}\ \Lambda^{-1}\ T_{DFT} \cdot e \qquad (13)$$

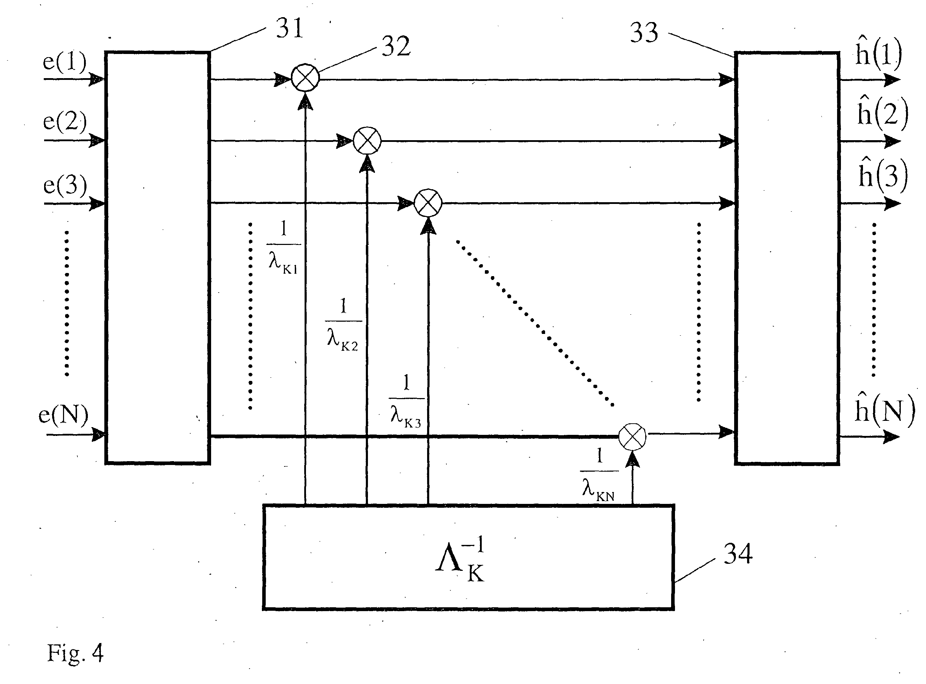

Die Bestimmung von $\hat{h}_N$ läuft in folgenden drei Schritten ab - siehe Fig. 4:

1. Das Empfangssignal wird einer diskreten Fouriertransformation (DFT) im Funktionsblock 31 unterworfen, d.h. einer Multiplikation mit der Matrix **$T_{DFT}$** gemäß Gleichung (9)
2. Das Ergebnis wird mit der in Block 34 gespeicherten Matrix $\Lambda^{-1}$ mittels der Multiplizierer 32 multipliziert. Da A eine Diagonalmatrix ist, ergibt sich die Inverse aus den Kehrwerten der Elemente der Hauptdiagonalen. Als Ergebnis liefert Schritt 2. einen Schätzwert der Übertragungsfunktion $\underline{H}$ (η) bei den diskreten Frequenzen

$$\eta = \frac{k-\dfrac{N}{2}}{Tp}$$

mit k = 1,2 ... N.

3. Das Ergebnis von 2. wird schließlich der inversen diskreten Fouriertransformation (IDFT), d.h. einer Multiplikation mit der Matrix $\mathbf{T^{-1}_{DFT}}$ in Funktionsblock 33 unterworfen und so in den Zeitbereich zurücktransformiert und liefert die Schätzung der diskreten Impulsantwort **h(k).**

Bei einer Implementierung des beschriebenen Verfahrens auf digitalen Rechenmaschinen können DFT und IDFT sehr effizient mit dem Algorithmus der schnellen Fouriertransformation (FFT) realisiert werden. Dadurch reduziert sich die Matrixinversion aus Gleichung (7) entsprechend Gleichung (13) auf eine FFT-Berechnung, eine Multiplikation mit den Kehrwerten des Vektors λ sowie eine IFFT-Berechnung. Als Ergebnis steht neben der Impulsantwort auch die komplexe Übertragungsfunktion zur Verfügung (siehe Fig. 4).

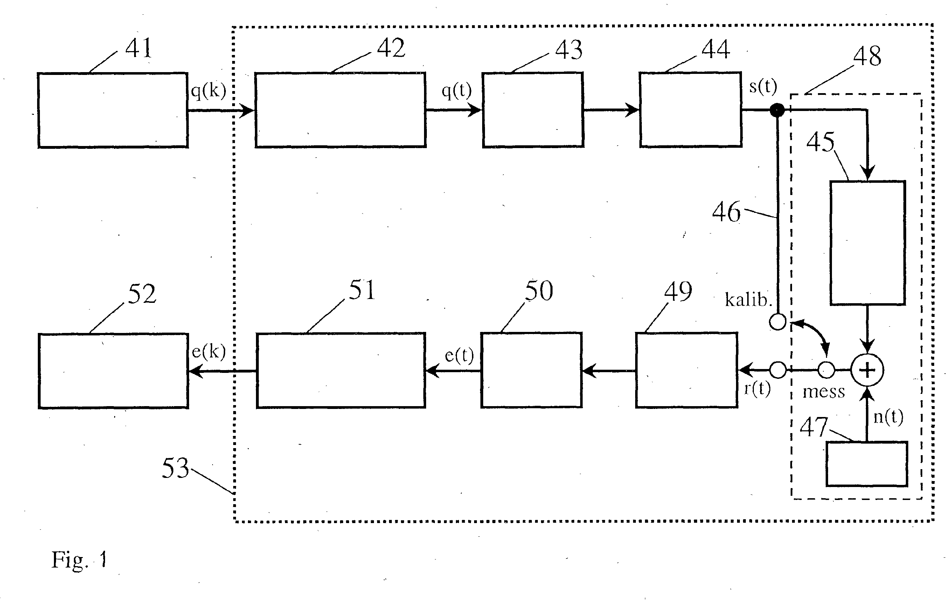

Ein System zur Bestimmung der komplexen Übertragungsfunktion von Niederspannungsnetzen benötigt neben der Sendesignalerzeugung und der digitalen Signalverarbeitung im Empfänger auch Komponenten zur Ein- und Auskopplung der Signale ins Stromnetz. Fig. 1 zeigt den gesamten Aufbau des erfindungsgemäßen Systems zur Kanalschätzung. Das in einem Sendespeicher 41 abgelegte digitale Sendesignal q(k) durchläuft einen Digital/Analogwandler mit Rekonstruktionsfilter 42. Nach Verstärkung auf die gewünschte Sendeamplitude in 43 wird das Sendesignal s(t) über einen Koppler 44 mit Hochpaßcharakteristik und galvanischer Trennung in das Stromnetz eingekoppelt. Dort durchläuft es den Kanal 48, mit dem Funktionsblock 45, der die Impulsantwort beinhaltet und Block 47, der die Störungen repräsentiert.

Am Empfangsort wird das Signal r(t) über den Empfangskoppler 49 mit Hochpaßcharakteristik und ebenfalls galvanischer Trennung einem Verstärker 50 zugeführt, der das Signal zur optimalen Ausnutzung der Eingangsdynamik des A/D-Wandlers 51 verstärkt. Vor der A/D-Wandlung wird das Empfangssignal zur Vermeidung von Aliasing bandbegrenzt. Jetzt steht das digitale Empfangssignal e(k) entsprechend Gleichung (2) zur erfindungsgemäßen Bestimmung der Übertragungsfunktion im Schätzsystem 52 zur Verfügung.

Zur Eliminierung linearer Verzerrungen, die insbesondere von den analogen Meßsystemkomponenten verursacht werden, ist es vorteilhaft, wenn das Meßsystem einen Kalibriermodus beinhaltet, der eine Bestimmung dieser Verzerrungen erlaubt.

Die insgesamt gemessene Impulsantwort $\underline{H}$g setzt sich gemäß Fig. 1 aus drei Teilen zusammen, nämlich

der Impulsantwort $h_{SK}(k)$ der Komponenten des Sendezweiges,
der gesuchten Impulsantwort h(k) des Übertragungskanals (Stromnetz) und
der Impulsantwort $h_{EK}(k)$ der Komponenten des Empfangszweiges.

Damit erhält man ein mit der Impulsantwort der Senderkomponenten gefaltetes, modifiziertes Sendesignal

$$s(k) = q(k) * h_{SK}(k) \tag{14}$$

Am Empfänger erhält man dann

$$r(k) = s(k) * h(k) + n(k) \tag{15}$$

Da r(k) noch die Komponenten des Empfangszweiges durchläuft, ergibt sich eine weitere Faltung mit deren Impulsantwort, so dass schließlich

$$e(k) = r(k) * h_{EK}(k) \tag{16}$$

als Eingangsgröße für die Schätzung zur Verfügung steht. Insgesamt erhält man somit

$$e(k) = \underbrace{q(k) * h_{SK} * h_{EK}(k)}_{\text{effektives Sendesignal } q_{\text{eff}}(k)} * h(k) + h_{EK}(k) * n(k) \qquad (17)$$

Das effektive Sendesignal $q_{\text{eff}}(k)$ nach Gleichung (17) beinhaltet die Modifikation des ursprünglichen Sendesignals q(k) durch die Sender- und Empfängerkomponenten nach Fig. 1. Zur Bestimmung der gesuchten Impulsantwort h(k) eines Übertragungskanals ist zuvor in einem Kalibriermodus entsprechend Gleichung (10) und Gleichung (11) die Matrix

$$\Lambda_K = \text{diag}(\lambda_K), \text{ mit } \lambda_K = T_{DFT} \cdot q_{\text{eff}} \qquad (18)$$

zu ermitteln und abzuspeichern. Das geschieht gemäß Fig. 1 in einfacher Weise durch direkte Verbindung von Sende- und Empfangskoppler 44, 49 mittels Leitung 46.

Im Vergleich zum bekannten Stand der Technik kann die Bestimmung von komplexer Übertragungsfunktion und Impulsantwort von Nachrichtenübertragungskanälen in elektrischen Energieverteilnetzen mittels breitbandiger Kanalschätzung durch eine relativ lange Folge von Impulsen kleiner Amplitude mit bestimmten Mustern, sogenannten expandierten Impulsen, rasch und selbst bei einem stark gestörten Kanal mit hoher Genauigkeit bestimmt werden. In Verbindung mit den Kalibriermodus kann eine Optimierung auf den Anwendungsfall vorgenommen werden.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise können die digitalen Funktionen zur Sendesignalerzeugung und zur empfängerseitigen Durchführung der Schätzung mittels einem digitalen Signalprozessor (DSP) oder einer Digitalschaltung vergleichbarer Funktion realisiert werden; mit Ausnahme der Sendekoppler und Empfangskoppler alle Komponenten der Einrichtung in einem kompakten Personalcomputer, z.B. für den mobilen Feldeinsatz eingebaut werden u.a.

## Patentansprüche

1. Verfahren zur Bestimmung von komplexer Übertragungsfunktion und reeller Impulsantwort von Nachrichtenübertragungskanälen (12, 48) in elektrischen Energieverteilnetzen im Frequenzbereich mit einer unteren Grenzfrequenz von einem Mehrfachen der Netzfrequenz mittels breitbandiger Kanalschätzung, bei dem

   a) sendeseitig (11) nach Maßgabe einer binären Pseudozufallsfolge ein breitbandiges periodisches Sendesignal (s(t)) mit annähernd weißem Spektrum im Messbereich, bestehend aus einer relativ langen Folge von Impulsen kleiner Amplitude mit bestimmten Mustern, sogenannten expandierten Impulsen, erzeugt und in das Energieverteilnetz eingespeist wird,
   b) empfangsseitig (13) das Empfangssignal (r(t)) nach Aufbereitung einem erwartungstreuen Schätzer (52) zur Schätzung der komplexen Übertragungsfunktion und der Impulsantwort des untersuchten Kanals (48) zugeführt wird,
   c) das unter Ausnutzung des Wissens über die Periodenlänge des Sendesignals (s(t)) gewonnene Schätzergebnis, durch Wiederholung der Schätzung und Mittelwertbildung über die jeweiligen Ergebnisse, stetig verbessert wird,

   wodurch auch unter extremen Störbedingungen eine genaue Schätzung ermöglicht wird und ohne dass eine zusätzliche Rückleitung zwischen Sender (11) und Empfänger (13) oder ein Zeit- und Frequenznormal zur Synchronisation erforderlich ist.

2. Verfahren nach Anspruch 1, **dadurch gekennzeichnet, dass** die binäre Pseudozufallsfolge in Form einer m-Sequenz erzeugt (in 21) wird, wobei Folgenlänge und die Taktfrequenz an den zu untersuchenden Kanal anpassbar sind, und dass durch Vervielfachen der Abtastrate (in 22) die m-Sequenz so breitbandig wird, dass im interessierenden Frequenzbereich ein annähernd weißes Spektrum vorliegt.

3. Verfahren nach Anspruch 1, **dadurch gekennzeichnet, dass** die Übertragungsfunktionen bzw. Impulsantworten von sende- und empfangsseitigen Komponenten zur Filterung, Verstärkung und Kopplung von Sendesignal (s(t)) und Empfangssignal (r(t)) in einem Kalibriermodus bestimmt und als "Kalibrierspektrum" gespeichert werden, so dass bei nachfolgenden Messungen ausschließlich die komplexe Übertragungsfunktion bzw. die reelle Impulsantwort des zu vermessenden Kanals erfaßt wird.

**4.** Verfahren nach Anspruch 1, **dadurch gekennzeichnet, dass** das Schätzverfahren nach Maßgabe folgender Schätzgleichung erfolgt

$$\hat{h} = Q^{-1} \cdot e = T^{-1}_{DFT} \; \Lambda^{-1} \; T_{DFT} \cdot e$$

wodurch eine Schätzung im Zeitbereich vorgenommen wird, welche auf der Inversion der Matrix $Q_{eff}$ des effektiven Sendesignals basiert.

**5.** Verfahren nach Anspruch 4, **dadurch gekennzeichnet, dass** das zeitdiskrete Empfangssignal (e (k)) einer diskreten Fouriertransformation (DFT) (im Funktionsblock 31) unterworfen wird, dass das Ergebnis mit einer gespeicherten inversen Diagonalmatrix ($\Lambda^{-1}$, im Speicher 34 gespeichert) multipliziert (32) wird und dass der so erhaltene Schätzwert der Übertragungsfunktion $\underline{H}(\eta)$ einer inversen diskreten Fouriertransformation (IDFT) (Multiplikation mit der Matrix $T^{-1}_{DFT}$ im Funktionsblock 33) unterworfen und in den Zeitbereich zurücktransformiert wird, wodurch die Schätzung der diskreten Impulsantwort $\underline{h}$ (k) erhalten wird.

**6.** Verfahren nach den Ansprüchen 3 und 5, **dadurch gekennzeichnet, dass** zur Bestimmung der gesuchten Impulsantwort h (k) eines Übertragungskanals zuerst im Kalibriermodus. Sende- und Empfangskoppler (44 und 49) miteinander verbunden werden (mittels Leitung 46) und dass danach die Matrix

$$\Lambda_K = diag\,(\lambda_K), \; mit \; \lambda_K = T_{DFT} \cdot q_{eff}$$

ermittelt und abgespeichert (in 34) wird.

**7.** Einrichtung zur Durchführung des Verfahrens nach Anspruch **1, dadurch gekennzeichnet, dass**

a) sendeseitig eine binäre Pseudozufallsfolge in Form einer m-Sequenz derart erzeugt (in 21) wird, dass Folgenlänge and Taktfrequenz an den zu untersuchenden Kanal anpassbar sind, dass durch Vervielfachen der Abtastrate (in 22) die m-Sequenz so breitbandig wird, dass im interessierenden Frequenzbereich ein annähernd weißes Spektrum vorliegt, und dass dieser Bereich durch ein digitales Tiefpaßfilter (23) herausselektiert und einem Digital/Analogwandler (24) mit nachfolgendem Rekonstruktionstiefpass periodisch zugeführt wird und das nunmehr in analoger Form vorliegende breitbandige Sendesignal nach Verstärkung (in 43) in das Energieverteilnetz gekoppelt wird,

b) empfangsseitig zur Aufbereitung von Pegel und Spektrum des Empfangssignals (r(t)) für die anschließende Analog/Digitalwandlung in einem Analog-Digital-Wandler (51) ein Empfangskoppler (49), ein Verstärker (50) und ein Antialiasing-Filter angeordnet sind und

c) das aufbereitete digitalisierte Empfangssignal (e(k)) am Ausgang des Analog-Digital-Wandlers (51) einer digitalen Rechenschaltung (52) zugeführt wird, welche die erwartungstreue Schätzung der Impulsantwort h (k) des Übertragungskanals vornimmt, wobei eine mehrfache Wiederholung der Schätzung und Mitteln der jeweiligen Resultate das Schätzergebnis stetig verbessert, so dass selbst unter hohen Störbedingungen die zuverlässige und genaue Bestimmung von Impulsantwort und komplexer Übertragungsfünktion möglich sind.

**8.** Einrichtung nach Anspruch 7, **dadurch gekennzeichnet, dass** zur Durchführung einer erwartungstreuen Schätzung der Impulsantwort h(k) des Übertragungskanals, in der digitalen Rechenschaltung (52) das aufbereitete digitalisierte Empfangssignal (e(k)) einem DFT-Prozessor (31) zur Durchführung der DFT zugeführt wird, dass die Aüsgangssignale des DFT-Prozessors (31) jeweils einem Multiplizierer (32) zugeführt werden, dass die Multiplizierer (32) mit einem IDFT-Prozessor (33) verbunden sind, wodurch eine Schätzung im Zeitbereich erfolgt und das aufbereitete digitalisierte Empfangssignal (e(k)) mit der invertierten Sendesignalmatrix $Q_{eff}^{-1}$ multipliziert wird und dass in der digitalen Rechenschaltung (52) ein FFT-Prozessor (31) und ein IFFT-Prozessor (33) angeordnet sind, wobei zur Bestimmung der komplexen Übertragungsfunktion $\underline{H}$ ($\eta$) der Schritt "IFFT durchführen" entfällt.

**9.** Einrichtung nach Anspruch 7, **dadurch gekennzeichnet, dass** nach Umschaltung in den Kalibriermodus, Sendekoppler (44) und Empfangskoppler (49) über eine Leitung (46) direkt miteinander verbunden sind und dass dann das Kalibrierspektrum gemessen und in einem Speicher (34) gespeichert wird.

10. Einrichtung nach Anspruch 7, **dadurch gekennzeichnet, dass** die digitalen Funktionen zur Sendesignalerzeugung und zur empfängerseitigen Durchführung der Schätzung mittels einem digitalen Signalprozessor (DSP) oder einer Digitalschaltung vergleichbarer Funktion realisiert sind und dass mit Ausnahme der Sendekoppler (44) und Empfangskoppler (49) alle Komponenten der Einrichtung in einem kompakten Personalcomputer, z.B. für den mobilen Feldeinsatz eingebaut sind.

Fig. 1

Fig. 2

Fig. 3

Fig. 4

EP 1 162 759 A2